# EUROPEAN PATENT SPECIFICATION

(11) **EP 3 645 426 B1**
(45) Date of publication and mention of the grant of the patent: **13.08.2025**
(21) Application number: 18723809.2
(22) Date of filing: 08.05.2018
(51) Int. Cl.: B65G 1/04, F25D 13/04, F25D 25/04

(54) **AUTOMATED STORAGE AND RETRIEVAL SYSTEM COMPRISING DIFFERENT TEMPERATURE ZONES**
AUTOMATISCHES LAGER- UND ENTNAHMESYSTEM MIT VERSCHIEDENEN TEMPERATURZONEN
SYSTÈME DE STOCKAGE ET DE RÉCUPÉRATION AUTOMATISÉ COMPRENANT DIFFÉRENTES ZONES DE TEMPÉRATURE

(30) Priority: 29.06.2017 NO 20171064
(43) Date of publication of application: 06.05.2020
(60) Divisional application: 24220917.9
(73) Proprietor: Autostore Technology AS, 5578 Nedre Vats (NO)
(72) Inventor: FJELDHEIM, Ivar, N-5533 Haugesund (NO); AUSTRHEIM, Trond, N-5590 Etne (NO); HOGNALAND, Ingvar, N-5578 Nedre Vats (NO); GJERDEVIK, Øystein, 5574 Skjold (NO)
(74) Representative: Kilburn & Strode LLP
(86) International application number: PCT/EP2018/061886
(87) International publication number: WO 2019/001816

(56) References cited:
- WO-A1-2014/075937
- WO-A1-2016/198467
- NO-B1- 340 341
- US-A1- 2017 176 082

## Description

### Technical field

The present invention relates to an automated storage and retrieval system comprising a three-dimensional grid with a plurality of storage columns for storing containers. More specifically, the invention relates to such a system having different temperature zones and means for transporting containers between the different temperature zones.

### Background and prior art

The applicant's own AutoStore ^{©} system is an automated storage system comprising a three-dimensional storage grid wherein storage containers are stacked on top of each other to a certain height in columns in the grid, and where container operating vehicles are operating on the grid.

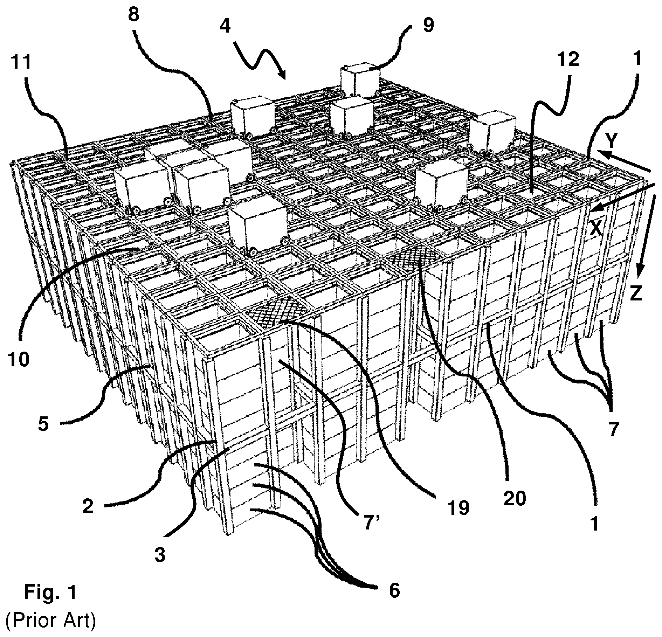

Fig. 1 discloses a framework structure 1 of such an automated storage and retrieval system with container handling vehicles operating on a grid.

The framework structure 1 comprises a plurality of upright members 2 and a plurality of horizontal members 3, which are supported by the upright members 2. The members 2, 3 may typically be made of metal, e.g. extruded aluminium profiles.

The framework structure 1 defines a storage grid 4 comprising storage columns 5 arranged in rows, in which the storage columns 5 store containers 6, also known as bins, that are stacked one on top of each other to form stacks 7. Each storage container 6 may typically contain a plurality of product items (not shown). The product items within a storage container 6 may be identical or they may be of different product types depending on the application. The framework structure 1 prevents horizontal movement of the stacks 7 of storage containers 6 and guides vertical movement of the containers 6.

The horizontal members 3 comprise a rail system 8 arranged in a grid pattern across the top of the storage columns 5, on which rail system 8 a plurality of container handling vehicles 9 are operated to raise storage containers 6 from and lower storage containers 6 into the storage columns 5, and to transport the storage containers 6 above the storage columns 5. The rail system 8 comprises a first set of parallel rails 10 arranged to guide movement of the container handling vehicles 9 in a first direction X across the top of the frame structure 1, and a second set of parallel rails 11 arranged perpendicular to the first set of rails 10 to guide movement of the container handling vehicles 9 in a second direction Y, which is perpendicular to the first direction X. In this way, the rail system 8 defines grid columns 12 above which the container handling vehicles 9 can move laterally above the storage columns 5 in either the X or Y direction, i.e. in a plane which is parallel to the horizontal X-Y plane.

Each container handling vehicle 9 comprises a vehicle body and first and second sets of wheels which enable the lateral movement of the container handling vehicle 9, i.e. the movement in the X and Y directions. A first set of wheels is arranged to engage with two adjacent rails of the first set 10 of rails, and the second set of wheels is arranged to engage with two adjacent rails of the second set 11 of rails. Each set of wheels can be lifted and lowered, so that the first set of wheels and/or the second set of wheels can be engaged with the respective set of rails 10, 11 at any one time.

Each container handling vehicle 9 also comprises a lifting device (not shown in Fig. 1) for vertical transportation of storage containers 6, e.g. raising a storage container 6 from and lowering a storage container 6 into a storage column 5. The lifting device further comprises a gripping device (not shown) which is adapted to engage a storage container 6, which gripping device can be lowered from the vehicle body so that the position of the gripping device with respect to the vehicle body 13 can be adjusted in a third direction Z, which is orthogonal to the first direction X and the second direction Y.

Each container handling vehicle 9 comprises a storage compartment or space for receiving and stowing a storage container 6 when transporting the storage container 6 across the grid 4. The storage space may comprise a cavity arranged centrally within the vehicle body 13, e.g. as is described in WO2014/090684A1.

Alternatively, the container handling vehicles may have a cantilever construction, as is described in NO317366.

In a storage grid, most of the grid columns 12 are storage columns 5, i.e. grid columns where storage containers are stored in stacks. However, a grid normally has at least one grid column which is not used for storing storage containers, but which comprises a location where the container handling vehicles can drop off and/or pick up storage containers so that they can be transported to an access station where the storage containers can be accessed from outside of the grid or transferred out of or into the grid. Within the art, such a location is normally referred to as a "port" and the grid column in which the port is located may be referred to as a port column.

The grid 4 in Fig. 1 comprises two port columns 19 and 20. The first port column 19 may for example be a dedicated drop-off port column where container handling vehicles 9 can drop off storage containers 6 to be transported to an access or a transfer station (not shown), and the second port 20 column may be a dedicated pick-up port column where the container handling vehicles 9 can pick up storage containers 6 that have been transported to the grid 4 from an access or a transfer station.

The access station may typically be a picking or a stocking station where product items are removed from or positioned into the storage containers. In a picking or a stocking station, the storage containers are normally never removed from the automated storage and retrieval system but are returned into the grid once accessed. A port can also be used for transferring storage containers out of or into the grid, e.g. for transferring storage containers to another storage facility (e.g. to another grid or to another automated storage and retrieval system), to a transport vehicle (e.g. a train or a lorry), or to a production facility.

A conveyor system comprising conveyors is normally employed to transport storage containers between the ports and the access station.

If the port and the access station are located at different levels, the conveyor system comprises a lift device for transporting the storage containers vertically between the port and the access station.

The conveyor system may be arranged to transfer storage containers between different grids, e.g. as is described in WO2014/075937A1.

WO2016/198467A1, discloses an example of a prior art access system having conveyor belts (Figs. 5a and 5b) and a frame mounted track (Figs. 6a and 6b) for transporting storage containers between ports and work stations where operators can access the storage containers. When a storage container 6 stored in the grid 4 disclosed in Fig. 1 is to be accessed, one of the container handling vehicles 9 is instructed to retrieve the target storage container from its position in the grid 4 and transport it to the drop-off port 19. This operation involves moving the container handling vehicle to a grid location above the storage column in which the target storage container is positioned, retrieving the storage container from the storage column using the container handling vehicle's lifting device (not shown), and transporting the storage container to the drop-off port 19. If the target storage container is located deep within a stack 7, i.e. with one or a plurality of other storage containers positioned above the target storage container, the operation also involves temporarily moving the above-positioned storage containers prior to lifting the target storage container from the storage column. This step, which is sometimes referred to as "digging" within the art, may be performed with the same container handling vehicle that is subsequently used for transporting the target storage container to the drop-off port 19, or with one or a plurality of other cooperating container handling vehicles. Alternatively, or in addition, the automated storage and retrieval system may have container handling vehicles specifically dedicated to the task of temporarily removing storage containers from a storage column. Once the target storage container has been removed from the storage column, the temporarily removed storage containers can be repositioned into the original storage column. However, the removed storage containers may alternatively be relocated to other storage columns.

When a storage container 6 is to be stored in the grid 4, one of the container handling vehicles 9 is instructed to pick up the storage container from the pick-up port 20 and transport it to a grid location above the storage column where it is to be stored. After any storage containers positioned at or above the target position within the storage column stack have been removed, the container handling vehicle 9 positions the storage container at the desired position. The removed storage containers may then be lowered back into the storage column or relocated to other storage columns.

For monitoring and controlling the automated storage and retrieval system, e.g. monitoring and controlling the location of respective storage containers within the grid 4; the content of each storage container 6; and the movement of the container handling vehicles 9 so that a desired storage container can be delivered to the desired location at the desired time without the container handling vehicles 9 colliding with each other, the automated storage and retrieval system comprises a control system, which typically is computerised and comprises a database for keeping track of the storage containers.

Known automated storage and retrieval systems as described above are constructed to be operated in areas having the same temperature. Inside a building this will typically be at ambient temperature, e.g. about 20°C. Usually, the temperature of product items stored in the containers is not a critical factor. However, for some products, such as food, the temperature is critical. To keep food cold at fridge temperature, a temperature between 1 - 4°C is desirable. For food to be frozen a temperature below - 20°C is desirable. This requires additional installations in the automated storage and retrieval system.

There is a need for an automatic storage and retrieval system having different temperature zones where the temperature can be controlled, and a transportation system for fast and efficient access and transportation of containers between the different temperature zones.

US2017/176082 A1, which the EPO identified in the examination procedure as the "closest prior art", describes a storage system which includes a grid structure of storage cells, where each cell is arranged to accommodate a vertical stack of storage bins and having a top level. At least one remotely operated vehicle is arranged to move at the top level of the grid structure and receive a bin from a storage cell at the top level of the grid structure. Each vehicle is equipped with a lift for picking up, carrying, and placing bins that are stored in the storage grid. The grid structure can be sub-divided into a number of sections separated from each other by thermal insulation constituting a thermal barrier. The thermal insulation gives the opportunity of having different temperature in the different sections of the grid structure. Insulating covers arranged in the top level of the grid structure can provide a thermal barrier towards the remotely operated vehicle as well as contributing to maintain the desired temperature in the bins in the grid structure. A bin lift device is arranged to receive a bin from a vehicle at the top level and to convey the bin down in a vertical direction to a delivery station, or port. Here the content of the bin can be collected, or the complete bin may be transported to its destination.

### Summary of the invention

The invention provide an automated storage and retrieval system according to claim 1. The automated storage and retrieval system comprises a three-dimensional storage grid with a plurality of storage columns for storing containers, one or more container handling vehicles, having lifting devices for lowering and raising storing containers, and where the container handling vehicles are operating on the storage grid and within a working space arranged above the storage grid, for retrieving storage containers from and storing storage containers in the storage columns, and for transporting the storage containers horizontally across the storage grid.

The automated storage and retrieval system further comprises:
- at least two different temperature zones arranged horizontally relative to the storage grid, and where the storage grid is arranged in at least one of the temperature zones,
- a thermal barrier dividing the at least two temperature zones,
- an access point accessible from one of the temperature zones (25, 26), and a port column for transferring storage containers (6) in and out of the storage grid (4),
- a rotating elevator for lowering and raising a storage container between the access point accessible from one temperature zone on one side of the thermal barrier and a transfer zone in the storage grid for conveying storage containers between the rotating elevator and the port column of the storage grid accessible to the one or more container handling vehicles within another temperature zone on the other side of the thermal barrier, where the rotating elevator comprises a plurality of shelves for conveying the storage containers between the different temperature zones, and wherein an upper part of the rotating elevator (30) protrudes above a normal level of the thermal barrier (28).

According to one embodiment of the invention the automated storage and retrieval system comprises one temperature zone which is an ambient temperature zone in a region above the storage grid and another temperature zone which is a cooler temperature zone enclosing the storage grid and the one or more container handling vehicles operating on the storage grid within a working space arranged above the storage grid.

According to one embodiment of the invention the thermal barrier further provides a floor which divides a working space of the one or more container handling vehicles from a second working space having access to containers from the rotating elevator.

In one embodiment, the elevator is arranged in a space between regions of storage columns of the storage grid. In another embodiment, the storage grid encircles the elevator.

According to one embodiment of the invention, the elevator has a first transfer zone on one side of the elevator for transferring a storage container from a storage column of the storage grid to the elevator and a second transfer zone on the other side of the elevator for transferring a storage container from the elevator to a port column of the storage grid. The transfer zones may comprise conveyors which are arranged to convey storage containers between the elevator a port of the storage grid, each transfer zone being arranged below the working space of the one or more container handling vehicles.

### Brief description of the drawings

Following drawings are appended to facilitate the understanding of the invention.
Fig. 1 is a perspective view of a storage grid of a prior art automated storage and retrieval system.
Fig. 2 is a side view of the automated storage and retrieval system having different temperature zones.
Fig. 3 is a side view of the automated storage and retrieval system having different temperature zones according to an embodiment of the invention.
Fig. 4 is a side view of the automated storage and retrieval system having different temperature zones and where storage grids are separated.

### Detailed description of the invention

In the following, embodiments of the invention will be discussed in more detail by way of example only and with reference to the appended drawings. The drawings are not intended to limit the invention which is defined by the claims, to the subject-matter depicted in the drawings.

Embodiments of automated storage and retrieval systems according to the invention will now be discussed in more detail with reference to the figures.

The invention concerns an automated storage and retrieval system according to claim 1 comprising a three-dimensional storage grid 4 with a plurality of storage columns 5 for storing containers 6, one or more container handling vehicles 9 operating on the storage grid 4 and within a working space arranged above the storage grid 4, for retrieving storage containers 6 from and storing storage containers 6 in the storage columns 5, and for transporting the storage containers 6 horizontally across the storage grid 4. This construction is known from applicants own AutoStore ^{©} system.

The automated storage and retrieval system is adapted for handling containers between different temperature zones comprised in the system.

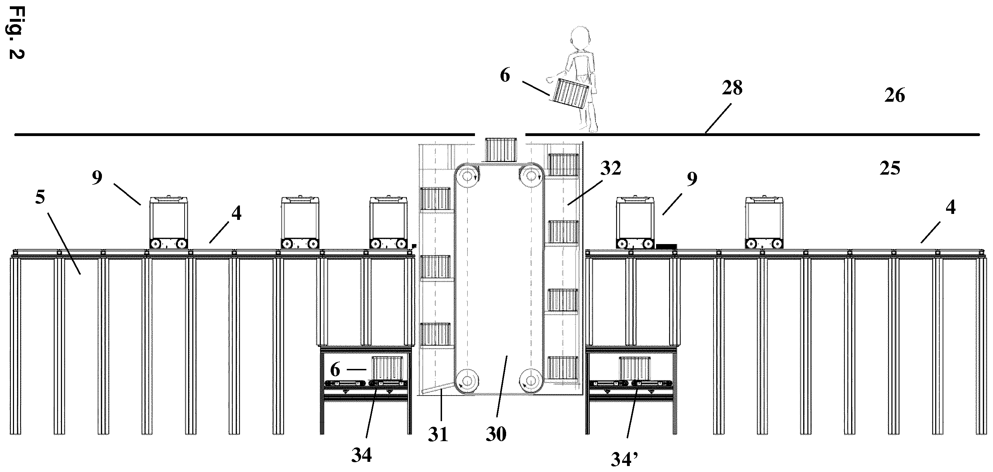

Figure 2 is a side view of an automated storage and retrieval system which is useful for understanding the present invention having different temperature zones. A lower location and an upper location of the automated storage and retrieval system is each provided with different temperature zones.

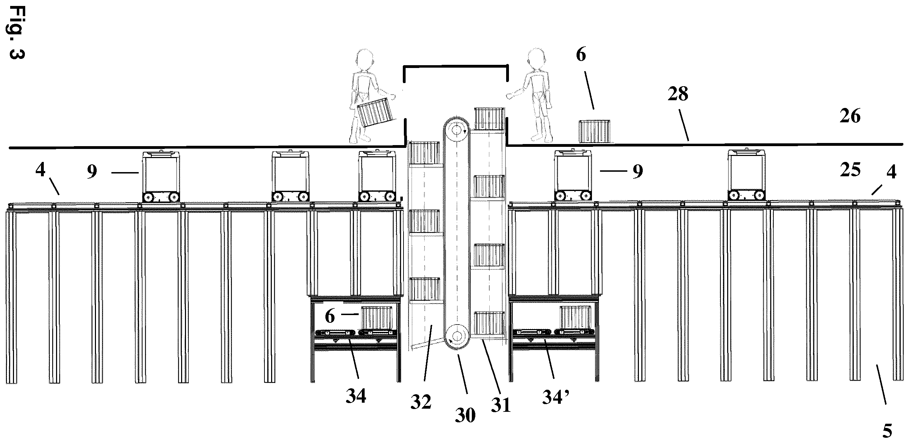

Figure 3 shows one embodiment of the invention, where an upper part of a rotating elevator extends above the level of the closed layer at the upper location relative to the storage grid 4, meaning that the elevator protrudes above a normal level of the thermal barrier 28. This embodiment provides an alternative access to containers 6 transported by the rotating elevator 30 compared to the embodiment shown in figure 2. The embodiment enables access to containers 6 from both sides of the rotating elevator 30 instead of access only from the top as illustrated in figure 2.

According to the present invention, the storage system comprises at least two different temperature zones 25, 26 arranged horizontally relative to the storage grid 4, and where the storage grid 4 is arranged in at least one of the temperature zones 25, 26. A thermal barrier 28 dividing the at least two temperature zones 25, 26, and a rotating elevator for lowering and raising a storage container 6 between an access point accessible from one temperature zone on one side of the thermal barrier 28 and a transfer zone 34 accessible to the one or more container handling vehicles 9 within another temperature zone on the other side of the thermal barrier 28.

According to one embodiment of the storage system, the elevator 30 is arranged in a space between regions of storage columns 5 of the storage grid 4. The storage grid 4 encircles the elevator. The elevator 30 can then be installed such that it occupies two or more columns of the storage grid 4.

One temperature zone is an ambient temperature zone 26 in a region above the storage grid 4 and another temperature zone is a cooler temperature zone 25 enclosing the storage grid 4 and the one or more container handling vehicles 9 operating on the storage grid 4 within a working space arranged above the storage grid.

The different temperature zones are preferably separated by a closed layer for ensuring physical separated temperature zones 25, 26. In one embodiment of the invention the closed layer is insulated. The insulation can be any type of known insulations material such as for instance expanded polyester, woven glass fibre or rock wool.

According to one embodiment of the invention, the thermal barrier 28 further provides a floor which divides a working space of the one or more container handling vehicles 9 from a second working space having access to containers from the elevator.

According to one aspect of the invention, the elevator is a rotating elevator 30 for transporting containers between the different temperature zones 25, 26. The rotating elevator 30 is installed such that it is running between an upper and a lower location relative to said storage grid 4.

The rotating elevator 30 may comprise a plurality of shelves 31 for conveying the storage containers 6 between the different temperature zones 25, 26. The shelves 31 are connected to a belt comprised in the rotating elevator. Each shelf 31may accommodate at least one container 6.

Constructional details of the rotating elevator are regarded as known prior art. There are a lot of examples of rotating elevators 30 also known as paternoster comprising a chain of open compartments 32 moving continuously in a loop up and down. Normally these are designed for passengers stepping in and out of the compartments 32. There are however similar elevators for transporting different items.

The rotating elevator is installed such that the shelves 31 are running between an upper and lower location of the storage system. In one embodiment of the invention, the upper location is arranged as a pick-up point for retrieving containers 6 transported by the rotating elevator 30, as well as an input point for storing containers 6 in the storage grid 4.

The upper location, arranged as a pick-up location, may be kept at ambient temperature while the lower location is kept at a low temperature for keeping different products stored in the containers 6 chilled or frozen. The rotating elevator 30 will provide an efficient way of transporting containers to and from the different temperature zones.

For efficiently moving containers 6 to and from the storage grid 4 and the shelves 31 of the rotating elevator 30, the automated storage and retrieval system may further comprise transfer zones 34 and 34'. According to one embodiment, the elevator has a first transfer zone 34 on one side of the elevator for transferring a storage container 6 from a storage column of the storage grid to the elevator and a second transfer zone 34' on the other side of the elevator for transferring a storage container 6 from the elevator to a port column of the storage grid.

If the elevator 30 is installed such that it occupies two or more columns of the storage grid 4, each transfer zone 34 and 34' for transferring containers 6 to and from the rotating elevator 30 can be installed in at least two storage columns 5 of the storage grid 4, i.e. one column is used for a transfer zone 34 for transferring a container 6 to the rotating elevator 30, and one columns is used for another transfer zone 34' for transferring a container 6 from the rotating elevator 30. Embodiments where the transfer zones 34 and 34' are integrated as part of a storage grid 4 are shown in figures 2 and 3.

The transfer zones 34, 34' comprises conveyors which are arranged to convey storage containers 6 between the elevator port of the storage grid 4, each transfer zone 34, 34' being arranged below the working space of the one or more container handling vehicles.

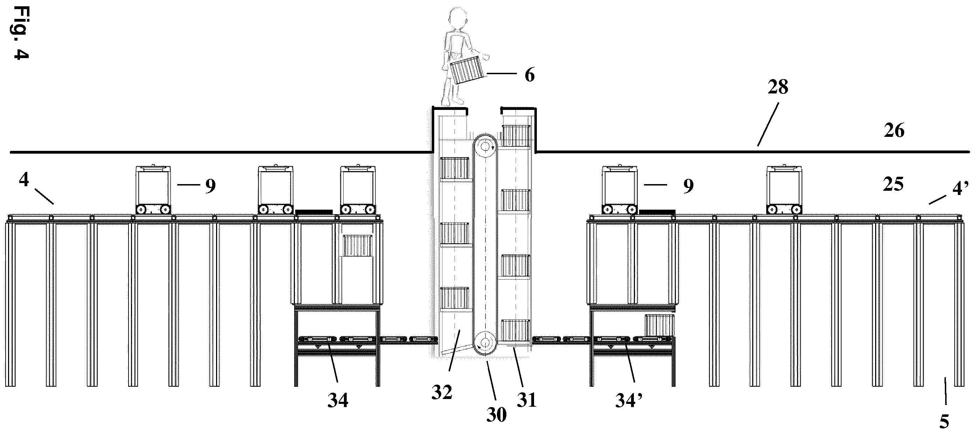

Figure 4 shows another embodiment of the automated storage and retrieval system having different temperature zones 25, 26. In this embodiment, two different storage grids 4, 4' are located at different locations and connected to the rotating elevator 30 by means of the transfer zones 34, 34', each having a length corresponding to the distance from the grids 4 and 4' to the rotating elevator 30, thus enabling transferring of containers 6 from the grids 4 and 4' and to and from the rotating elevator 30.

Containers 6 and different items contained in the containers 6 can be handled from the pick-up location by persons or robots. When a container 6 is raised to the pick-up point by means of the rotating elevator 30 it can be replaced with an empty container 6 or one or more items stored in the container can be picked-up.

When storing products such as food to be chilled or frozen the storing temperature is critical. For keeping food cold at fridge temperature, a temperature between 1°C to 4°C is desirable. For food to be frozen a temperature below - 18°C is desirable.

As an example of one embodiment of the invention, a lower part of the three-dimensional storage grid 4 is arranged to have a temperature for keeping food frozen. Another part of the storage grid 4, situated above said lower part is arranged to have a temperature for keeping food cold. The pick-up point, where products are picked from containers or placed in containers, may be held at ambient temperature, e.g. 20°C.

Transportation of containers between the different temperature zones is provided by arranging a rotating elevator for operation between the different temperature zones 25, 26. This is preferably a rotating elevator 30 installed such that it is running from an upper location, which in this case is the pick-up point, to a lower location relative to said storage grid 4, i.e. the chilled and/or frozen zones of the storage grid 4. The elevator is fitted with sections or compartments 32 for accommodating the containers 6 such that containers 6 are moved from one temperature zone to another when the rotating elevator 30 is running.

To enable transfer of containers 6 to and from the storage grids 4, 4' and the rotating elevator 30, the automated storage and retrieval system is arranged with transfer zones 34, 34'. Containers 6 can then be delivered to or picked up from the transfer zones 34, 34' by means of container handling vehicles operating on the storage grid 4. The transfer zones 34, 34' ensures that containers 6 are placed in or out of the compartments 32 of the rotating elevator 30.

Each compartment 32 of the rotating elevator 30 will typically accommodate one container 6. It is however possible to load and handle two or more containers 6 in each compartment 32 by making the sections bigger, in width and/or heights.

If a compartment 32 of the rotating elevator 30 is made bigger by increasing the height, the rotating elevator 30 will first receive one container 6, it will then rotate in a direction allowing another container 6 to be placed on top of the first container 6. This action normally means that the rotation direction of the elevator 30 is reversed in a period, thus enabling the second container to be placed on top of the first container 6 already placed in the compartment 32 of the rotating lift 30. When loading of the second container 6 is completed, the rotation direction of the elevator 30 will again return to the main rotation direction, e.g. in a clockwise direction.

The automated storage and retrieval system according to the invention can be customised to the layout of an existing building, where for instance one temperature zone is located at one floor of a building while another temperature zone is located at another floor. A rotating elevator 30 will provide an efficient way of transporting containers between the floors.

The present invention introduces an efficient and compact storage system for storing and accessing items in containers, and where these items are to be stored at a different temperature than the temperature at a pick-up location.

## Claims

1. An automated storage and retrieval system comprising a three-dimensional storage grid (4) with a plurality of storage columns (5) for storing containers (6), one or more container handling vehicles (9) having lifting devices for lowering and raising storing containers (6), and where the container handling vehicles (9) are operating on the storage grid (4) and within a working space arranged above the storage grid (4), for retrieving storage containers (6) from, and storing storage containers (6) in the storage columns (5), and for transporting the storage containers (6) horizontally across the storage grid (4), the automated storage and retrieval system further comprises:
- at least two different temperature zones (25, 26) arranged horizontally relative to the storage grid (4), and where the storage grid (4) is arranged in at least one of the temperature zones (25, 26),
- a thermal barrier (28) dividing the at least two temperature zones (25, 26),
- an access point accessible from one of the temperature zones (25, 26), and a port column for transferring storage containers (6) in and out of the storage grid (4),
- an elevator (30) for lowering and raising a storage container (6) between the access point accessible from one temperature zone on one side of the thermal barrier (28) and a transfer zone (34) in the storage grid (4) for conveying storage containers between the elevator (30) and the port column of the storage grid (4) accessible
to the one or more container handling vehicles (9) within another temperature zone on the other side of the thermal barrier (28), and wherein
the elevator (30) comprises a plurality of shelves (31) for conveying the storage containers (6) between the different temperature zones (25, 26), **characterised in that**
the elevator is a rotating elevator (30), wherein an upper part of the rotating elevator (30) protrudes above a normal level of the thermal barrier (28).

2. The automated storage and retrieval system according to claim 1, where one temperature zone is an ambient temperature zone (26) in a region above the storage grid (4) and another temperature zone is a cooler temperature zone (25) enclosing the storage grid (4) and the one or more container handling vehicles (9) operating on the storage grid (4) within the working space arranged above the storage grid.

3. The automated storage and retrieval system according to any of the previous claims, where the thermal barrier (28) further provides a floor which divides the working space of the one or more container handling vehicles (9) from a second working space having access to containers from the rotating elevator (30).

4. The automated storage and retrieval system according to any of the preceding claims, where the rotating elevator (30) is arranged in a space between regions of storage columns (5) of the storage grid (4).

5. The automated storage and retrieval system according to any of the previous claims, wherein the storage grid (4) encircles the rotating elevator (30).

6. The automated storage and retrieval system according to any of the previous claims, wherein the rotating elevator (30) has a first transfer zone (34) on one side of the rotating elevator (30) for transferring a storage container (6) from a storage column of the storage grid to the rotating elevator (30) and a second transfer zone (34') on the other side of the rotating elevator (30) for transferring a storage container (6) from the rotating elevator (30) to the port column of the storage grid.

7. The automated storage and retrieval system according to claim 6, where the transfer zones (34, 34') comprise conveyors which are arranged to convey storage containers (6) between the elevator port of the storage grid (4), each transfer zone (34, 34') being arranged below the working space of the one or more container handling vehicles.

## Patentansprüche

1. Automatisches Lager- und Entnahmesystem, umfassend ein dreidimensionales Lagerraster (4) mit mehreren Lagersäulen (5) zum Lagern von Behältern (6), wobei ein oder mehrere Behälterhandhabungsfahrzeuge (9) Hebevorrichtungen zum Absenken und Anheben von Lagerbehältern (6) aufweisen und wobei die Behälterhandhabungsfahrzeuge (9) im Lagerraster (4) und in einem über dem Lagerraster (4) angeordneten Arbeitsbereich zum Entnehmen von Lagerbehältern (6) aus und Einlagern von Lagerbehältern (6) in den Lagersäulen (5) und zum Transportieren der Lagerbehälter (6) horizontal über das Lagerraster (4) betrieben werden; wobei das automatische Lager- und Entnahmesystem ferner Folgendes umfasst:
- mindestens zwei verschiedene Temperaturbereiche (25, 26), die in Bezug zum Lagerraster (4) horizontal angeordnet sind, und wobei das Lagerraster (4) in mindestens einem der Temperaturbereiche (25, 26) angeordnet ist,
- eine Wärmesperre (28), welche die mindestens zwei Temperaturbereiche (25, 26) trennt,
- einen Zugangspunkt, der von einem der Temperaturbereiche (25, 26) aus zugänglich ist, und eine Zugangssäule zum Transportieren von Lagerbehältern (6) in das Lagerraster (4) hinein und daraus heraus,
- einen Aufzug (30) zum Absenken und Anheben eines Lagerbehälters (6) zwischen dem Zugangspunkt, der von einem Temperaturbereich auf einer Seite der Wärmesperre (28) aus zugänglich ist, und einem Übergabebereich (34) in dem Lagerraster (4) zum Befördern von Lagerbehältern zwischen dem Aufzug (30) und der Zugangssäule des Lagerrasters (4), die für das eine oder die mehreren Behälterhandhabungsfahrzeuge (9) in einem anderen Temperaturbereich auf der anderen Seite der Wärmesperre (28) zugänglich ist, und wobei
der Aufzug (30) mehrere Regale (31) zum Befördern der Lagerbehälter (6) zwischen den verschiedenen Temperaturbereichen (25, 26) umfasst, **dadurch gekennzeichnet, dass**
der Aufzug ein drehbarer Aufzug (30) ist, wobei ein oberer Teil des drehbaren Aufzugs (30) über eine normale Höhe der Wärmesperre (28) vorsteht.

2. Automatisches Lager- und Entnahmesystem nach Anspruch 1, wobei ein Temperaturbereich ein Umgebungstemperaturbereich (26) in einem Bereich über dem Lagerraster (4) ist und ein anderer Temperaturbereich ein kühlerer Temperaturbereich (25) ist, der das Lagerraster (4) und das eine oder die mehreren Behälterhandhabungsfahrzeuge (9), die in dem Lagerraster (4) innerhalb des über dem Lagerraster angeordneten Arbeitsbereichs betrieben werden, umschließt.

3. Automatisches Lager- und Entnahmesystem nach einem der vorstehenden Ansprüche, wobei die Wärmesperre (28) ferner einen Boden vorsieht, der den Arbeitsbereich des einen oder der mehreren Behälterhandhabungsfahrzeuge (9) von einem zweiten Arbeitsbereich mit Zugriff auf Behälter vom drehbaren Aufzug (30) trennt.

4. Automatisches Lager- und Entnahmesystem nach einem der vorstehenden Ansprüche, wobei der drehbare Aufzug (30) in einem Raum zwischen den Bereichen der Lagersäulen (5) des Lagerrasters (4) angeordnet ist.

5. Automatisches Lager- und Entnahmesystem nach einem der vorstehenden Ansprüche, wobei das Lagerraster (4) den drehbaren Aufzug (30) umschließt.

6. Automatisches Lager- und Entnahmesystem nach einem der vorstehenden Ansprüche, wobei der drehbare Aufzug (30) einen ersten Übergabebereich (34) auf einer Seite des drehbaren Aufzugs (30) zum Übergeben eines Lagerbehälters (6) von einer Lagersäule des Lagerrasters zum drehbaren Aufzug (30), und einen zweiten Übergabebereich (34') auf der anderen Seite des drehbaren Aufzugs (30) zum Übergeben eines Lagerbehälters (6) vom drehbaren Aufzug (30) zur Zugriffssäule des Lagerrasters aufweist.

7. Automatisches Lager- und Entnahmesystem nach Anspruch 6, wobei die Übergabebereiche (34, 34') Förderer umfassen, die dazu angeordnet sind, Lagerbehälter (6) zwischen der Aufzugsöffnung des Lagerrasters (4) zu befördern, wobei jeder Übergabebereich (34, 34') unter dem Arbeitsbereich des einen oder der mehreren Behälterhandhabungsfahrzeuge angeordnet ist.

## Revendications

1. Système automatisé de stockage et de récupération comprenant une grille de stockage tridimensionnelle (4) avec une pluralité de colonnes de stockage (5) pour stocker des récipients (6), un ou plusieurs véhicules de manutention de récipients (9) ayant des dispositifs de levage pour abaisser et élever des récipients de stockage (6), et les véhicules de manutention de récipients (9) fonctionnant sur la grille de stockage (4) et dans un espace de travail disposé au-dessus de la grille de stockage (4), pour récupérer des récipients (6) et stocker des récipients (6) dans les colonnes de stockage (5), et pour transporter les récipients de stockage (6) horizontalement sur la grille de stockage (4), le système automatisé de stockage et de récupération comprenant en outre :
- au moins deux zones de température différentes (25, 26) disposées horizontalement par rapport à la grille de stockage (4), la grille de stockage (4) étant disposée dans au moins une des zones de température (25, 26),
- une barrière thermique (28) séparant les au moins deux zones de température (25, 26),
- un point d'accès accessible depuis l'une des zones de température (25, 26), et une colonne de passage pour le transfert des récipients de stockage (6) dans et hors de la grille de stockage (4),
- un élévateur (30) pour abaisser et élever un récipient de stockage (6) entre le point d'accès accessible depuis une zone de température d'un côté de la barrière thermique (28) et une zone de transfert (34) dans la grille de stockage (4) pour transporter des récipients de stockage entre l'élévateur (30) et la colonne de passage de la grille de stockage (4) accessible aux véhicules de manutention de récipients (9) dans une autre zone de température de l'autre côté de la barrière thermique (28), et
l'élévateur (30) comprenant une pluralité d'étagères (31) pour transporter les récipients de stockage (6) entre les différentes zones de température (25, 26), **caractérisé en ce que**
l'élévateur est un élévateur rotatif (30), une partie supérieure de l'élévateur rotatif (30) faisant saillie au-dessus d'un niveau normal de la barrière thermique (28).

2. Système automatisé de stockage et de récupération selon la revendication 1, dans lequel une zone de température est une zone de température ambiante (26) dans une région au-dessus de la grille de stockage (4) et une autre zone de température est une zone de température plus froide (25) contenant la grille de stockage (4) et le ou les véhicules de manutention de récipients (9) fonctionnant sur la grille de stockage (4) dans l'espace de travail disposé au-dessus de la grille de stockage.

3. Système automatisé de stockage et de récupération selon l'une quelconque des revendications précédentes, dans lequel la barrière thermique (28) forme en outre un plancher qui divise l'espace de travail du ou des véhicules de manutention de récipients (9) d'un second espace de travail ayant accès aux récipients au niveau de l'élévateur rotatif (30).

4. Système automatisé de stockage et de récupération selon l'une quelconque des revendications précédentes, dans lequel l'élévateur rotatif (30) est placé dans un espace entre des régions de colonnes de stockage (5) de la grille de stockage (4).

5. Système automatisé de stockage et de récupération selon l'une quelconque des revendications précédentes, dans lequel la grille de stockage (4) encercle l'élévateur rotatif (30).

6. Système automatisé de stockage et de récupération selon l'une quelconque des revendications précédentes, dans lequel l'élévateur rotatif (30) possède une première zone de transfert (34) sur un côté de l'élévateur rotatif (30) pour transférer un récipient de stockage (6) d'une colonne de stockage de la grille de stockage à l'élévateur rotatif (30) et une seconde zone de transfert (34') sur l'autre côté de l'élévateur rotatif (30) pour transférer un récipient de stockage (6) de l'élévateur rotatif (30) à la colonne de passage de la grille de stockage.

7. Système automatisé de stockage et de récupération selon la revendication 6, dans lequel les zones de transfert (34, 34') comprennent des convoyeurs qui sont conçus pour transporter des récipients de stockage (6) entre le passage d'élévateur de la grille de stockage (4), chaque zone de transfert (34, 34') étant placée au-dessous de l'espace de travail du ou des véhicules de manutention de récipients.
